# EUROPÄISCHE PATENTSCHRIFT

(11) **EP 0 721 737 B1**
(45) Veröffentlichungstag und Bekanntmachung des Hinweises auf die Patenterteilung: **27.06.2001**
(21) Anmeldenummer: 95116468.0
(22) Anmeldetag: 19.10.1995
(51) Int. Cl.: A21C 5/04

(54) **Teigteil- und Wirk-Maschine**
Dough dividing and rounding machine
Machine à diviser et bouler la pâte

(30) Priorität: 13.01.1995 DE 19500851
(43) Veröffentlichungstag der Anmeldung: 17.07.1996
(73) Patentinhaber: Werner & Pfleiderer Lebensmitteltechnik GmbH, 91550 Dinkelsbühl (DE)
(72) Erfinder: Kock, Gerd, Dipl.-Ing., D-91550 Dinkelsbühl (DE)
(74) Vertreter: Rau, Manfred, Dr. Dipl.-Ing.

(56) Entgegenhaltungen:
- EP-A- 0 015 855
- WO-A-90/06683
- WO-A-93/00820
- FR-A- 2 113 302
- FR-A- 2 598 647
- GB-A- 521 260

## Beschreibung

Teigteil- und Wirk-Maschinen, wie sie beispielsweise aus der DE 41 42 931 A (entsprechend US-Patent 5 242 698) bekannt sind, weisen einen Teigtrichter und eine diesem nachgeordnete Förderkammer mit einem hin- und hergehend antreibbaren Förderkolben auf, der zum Füllen von mehreren in einem Drehschieber angeordneten Meßkammern dient. In den Meßkammern ist jeweils ein Meßkolben angeordnet, der beim Füllhub verschoben wird und der umgekehrt beim Rückhub der Förderkolben bei gleichzeitigem Verdrehen des Drehschiebers jeweils ein Teigstück aus der jeweiligen Meßkammer ausstößt. Die Teigstücke fallen dann in Wirkkammern einer Wirk-Einrichtung. Nach dem Wirken werden die gewirkten Teigstücke über eine Transport-Einrichtung ausgegeben und beispielsweise einem Gärschrank zugeführt.

In der Praxis ist das Problem aufgetaucht, daß zeitgleich Teigstücke aus Teigen unterschiedlicher Rezepturen abgeteilt und gemeinsam weiterbehandelt werden müssen, also gemeinsam und zeitgleich den Backofen verlassen müssen, um in einer gemeinsamen Packung abgepackt zu werden. Diese aus Teigen unterschiedlicher Rezepturen bestehenden Teigstücke müssen sehr oft auch noch unterschiedliche Teiggewichte haben.

Der Erfindung liegt daher die Aufgabe zugrunde, eine Teigteil- und Wirk-Maschine so auszugestalten, daß gleichzeitig nebeneinander Teigstücke unterschiedlicher Rezeptur hergestellt werden können.

Diese Aufgabe wird erfindungsgemäß durch die Merkmale des Anspruches 1 gelöst. Durch die erfindungsgemäßen Maßnahmen wird erreicht, daß die Teige unterschiedlicher Rezeptur einander nicht berühren, daß aber nebeneinander zeitgleich unterschiedliche Teigstücke aus den unterschiedlichen Teigen hergestellt werden können. Inbesondere wird durch die weitere Ausgestaltung nach den Unteransprüchen ermöglicht, daß die Teigstücke aus Teigen unterschiedlicher Rezepturen auch unterschiedliches Gewicht haben.

Zahlreiche weitere Merkmale, Vorteile und Einzelheiten der Erfindung ergeben sich aus der nachfolgenden Beschreibung eines Ausführungsbeispieles der Erfindung anhand der Zeichnung. Es zeigt
- Fig. 1: eine Teigteil- und Wirk-Maschine in schematischer, aufgebrochener Vertikaldarstellung,
- Fig. 2: die Teigteil- und Wirk-Maschine in Draufsicht,
- Fig. 3: die Teigteil-Einrichtung in gegenüber Fig. 1 vergrößertem Maßstab und

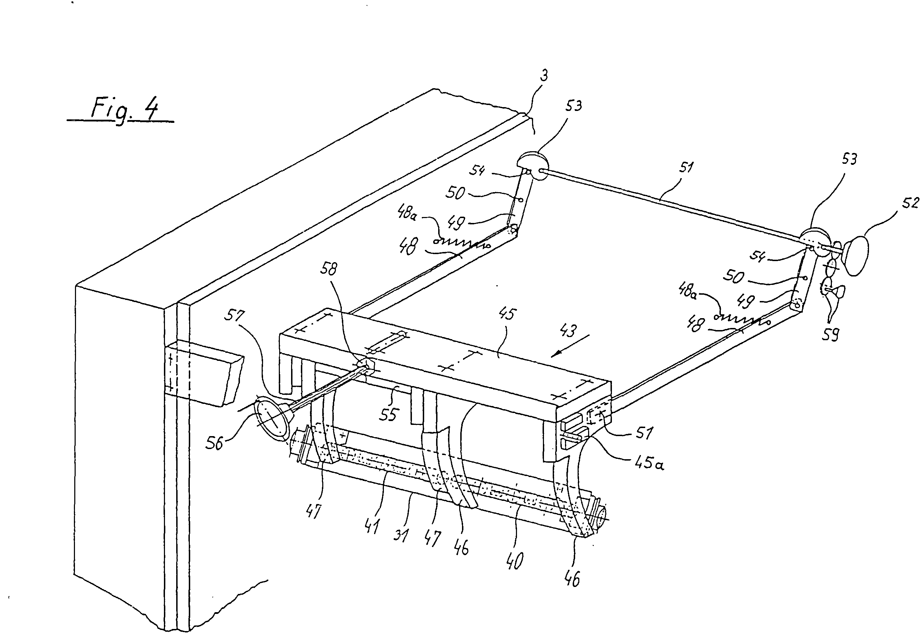

- Fig. 4: eine Gewichtseinstell-Einrichtung in perspektivischer Darstellung.

Die in der Zeichnung dargestellte Teigteil- und Wirk-Maschine weist ein etwa quaderförmiges Gestell 1 mit Seitenwänden 2, 3 auf. In dem Gestell 1 sind eine Teigteil-Einrichtung 4, eine Wirk-Einrichtung 5 und eine Transport-Einrichtung 6 angeordnet.

Die Teigteil-Einrichtung 4 weist zwei nebeneinander angeordnete durch eine Trennwand 7 voneinander getrennte Förderkammern 8, 9 auf, auf denen jeweils ein Teigtrichter 10 bzw. 11 angebracht ist, die ebenfalls als eine lediglich durch eine Zwischenwand 12 geteilte Einheit ausgebildet sein können. In jeder Förderkammer 8 bzw. 9 ist ein Förderkolben 13 bzw. 14 in Förderrichtung 15 und entgegengesetzt zur Förderrichtung verschiebbar.

Der Antrieb der Förderkolben 13, 14 erfolgt durch einen im unteren Bereich des Gestells 1 angeordneten, beispielsweise als Getriebemotor ausgebildeten Antriebsmotor 16. Vom Antriebsmotor 16 wird über einen Kettentrieb 17 ein Kurbeltrieb 18 angetrieben. Von diesem wird eine Schubstange 19 hin- und hergehend angetrieben, die wiederum an einem Schwenkhebel 20 angelenkt ist, der fest mit einer Schwingwelle 21 verbunden ist, die in Lagern 22 drehbar gelagert ist, die wiederum in den Seitenwänden 2, 3 des Gestells 1 angebracht sind. Auf der Schwingwelle 21 sind zwei Schwinghebel 23, 24 mittels einer lösbaren Klemmeinrichtung 25 angebracht, so daß die Winkellage der Schwinghebel 23, 24 gegeneinander eingestellt werden kann. Die der Schwingwelle 21 abgewandten freien Enden der Schwinghebel 23, 24 sind mittels einer Schwenkverbindung 26 jeweils mit einem Förderkolben 13 bzw. 14 verbunden. Bei einer Umdrehung des Kurbeltriebs 18 machen somit die Förderkolben 13, 14 einen vollen Hub in Förderrichtung 15 und einen entsprechenden Rückhub entgegen der Förderrichtung 15.

Die Schubstange 19 ist als hydraulisch beaufschlagbarer Kolben-Zylinder-Antrieb ausgebildet, dessen Zylinder 27 beispielsweise an dem Schwenkhebel 20 angelenkt ist, während die Kolbenstange 28 an dem Kurbeltrieb 18 angelenkt ist. Der Zylinder 27 ist über eine Druckleitung 29 mit einem einstellbaren Druckbegrenzungsventil 30 verbunden. Wird die auf die Förderkolben 13, 14 bei einem Förderhub in Förderrichtung 15 wirkende Gegenkraft so groß, daß im Zylinder 27 der hydraulische Druck einen vorgegebenen, am Druckbegrenzungsventil 30 eingestellten Wert überschreitet, dann öffnet dieses Druckbegrenzungsventil 30 und der Förderhub der Förderkolben 13, 14 wird unterbrochen, d.h. die Förderkolben 13, 14 bleiben in ihrer Position stehen und werden beim Weiterdrehen des Kurbeltriebs 18 erst beim Rückhub entgegen der Förderrichtung 15 wieder mitgenommen. Da hierbei im Zylinder 27 eine Druckentlastung eintritt, wird entsprechend das Druckbrenzungsventil 30 wieder geschlossen, beim nächsten Hub der Förderkolben 13, 14 in Förderrichtung 15 hat die Schubstange 19 wieder ihre ursprüngliche Länge.

In Förderrichtung 15 hinter den Förderkammern 8, 9 befindet sich ein Drehschieber 31, der um eine Achse 32 drehschwenkbar ist. In dem Drehschieber 31 befindet sich eine Meßeinheit 33, in der mehrere Meßkammern 34 ausgebildet sind, die gleichen Durchmesser haben. Die Meßeinheit 33 ist mittels Schrauben 35 mit dem Drehschieber 31 verbunden, so daß sie leicht auswechselbar ist gegen eine andere Meßeinheit 33 mit Meßkammern 34, die einen kleineren oder einen größeren Durchmesser aufweisen. In den an beiden Enden offenen zylindrischen Meßkammern 34 sind Meßkolben 36 verschiebbar angeordnet, die eine Kolbenfläche 37 aufweisen, deren Krümmung der Krümmung des Drehschiebers 31 entspricht. Die Meßkolben 36 weisen einen Stößel 38 auf, der aus dem Drehschieber 31 herausragt und an seinem der Kolbenfläche 37 entgegengesetzten Ende mit einer Druckfläche 39 gegen eine Steuerwalze 40 bzw. 41 anliegt, wobei den der Förderkammer 8 zugeordneten Meßkolben 36 eine Steuerwalze 40 zugeordnet ist, während den der Förderkammer 9 zugeordneten Meßkolben 36 eine weitere Steuerwalze 41 zugeordnet ist.

Die Steuerwalzen 40, 41 sind jeweils in einem Paar von Gabeln 42 gelagert, die am Drehschieber 31 angebracht sind. Sie sind in diesen Gabeln 42 radial zur Achse 32 des Drehschiebers 31 verschiebbar. Die Größe des Hubes der Meßkolben 36 wird durch eine Gewichtseinstell-Einrichtung 43 vorgegeben, durch die also das Gewicht eines in einer Meßkammer 34 abgeteilten Teigstücks 44 festgelegt wird.

Diese Gewichtseinstell-Einrichtung 43 weist an einem Grundkörper 45 jeweils paarweise Kurvenstücke 46 bzw. 47 auf, wobei an einem Paar Kurvenstücken 46 die Steuerwalze 40 und an dem andere Paar Kurvenstücken 47 die Steuerwalze 41 anliegt. Wenn der Drehschieber 31 um seine Achse 32 geschwenkt wird, dann wird die jeweilige Steuerwalze 40 bzw. 41 an den Kurvenstücken 46 bzw. 47 entlanggeführt, wodurch die Meßkolben 36 einen Hub ausführen können, worauf weiter unten noch im einzelnen eingegangen wird. Der Grundkörper 45 ist mittels einer Führungseinrichtung 45a im Gestell 1 verschiebbar gelagert. Er ist mit zwei parallel zueinander im Bereich der Seitenwände 2, 3 verlaufenden Schubstangen 48 verbunden, an deren dem Grundkörper 45 abgewandten Ende jeweils ein doppelarmiger Hebel 49 angelenkt ist, der mittels eines Schwenkgelenks 50 in der Seitenwand 2 bzw. der Seitenwand 3 schwenkbar gelagert ist. In den Seitenwänden 2, 3 des Gestells 1 ist eine Stellwelle 51 drehbar gelagert, die mittels eines Handrades 52 drehbar ist. Auf ihr sind zwei Kurvenscheiben 53 angebracht, die an mit den Hebeln 49 angebrachten Verstellzapfen 54 anliegen. Durch Verschwenken der Stellwelle 51 mit den Kurvenscheiben 53 wird damit der Grundkörper 45 mit den Kurvenstücken 46 bzw. 47 verschoben, so daß die Lage der Kurvenstücke 46 bzw. 47 relativ zum Drehschieber 31 verändert wird. Diese Verschiebung des Grundkörpers 45 mit den Kurvenstücken 46 bzw. 47 erfolgt in der Weise, daß bei einer Position des Drehschiebers 31 mit zu den Förderkammern 8, 9 offenen Meßkammern 34 die Kolbenflächen 37 der Meßkolben 36 immer bündig mit der zylindrischen Fläche 31a des Drehschiebers 31 liegen. Die Verschiebung des Grundkörpers 45 erfolgt gegen die Kraft einer einerseits an mindestens einer Schubstange 48 und andererseits am Gestell 1 angreifenden vorgespannten Zugfeder 48a, so daß die Verstellzapfen 54 ständig an der jeweiligen Kurvenscheibe 53 anliegen.

Die Kurvenstücke 47, an denen die Steuerwalze 41 anliegt, sind an einem Schlitten 55 angebracht, der am Grundkörper 45 in Richtung der Schubstangen 48 verschiebbar gelagert ist. Eine Einstellung erfolgt mittels einer über ein Handrad 56 betätigten Spindel 57, die in einer eingestellten Stellung mittels Muttern 58 od.dgl. in ihrer eingestellten Position arretiert werden kann. Die Stellwelle 51 bzw. die Hebel 49 bzw. die Schubstangen 48 werden in ihrer eingestellten Stellung mittels einer Klemmeinrichtung 59 arretiert.

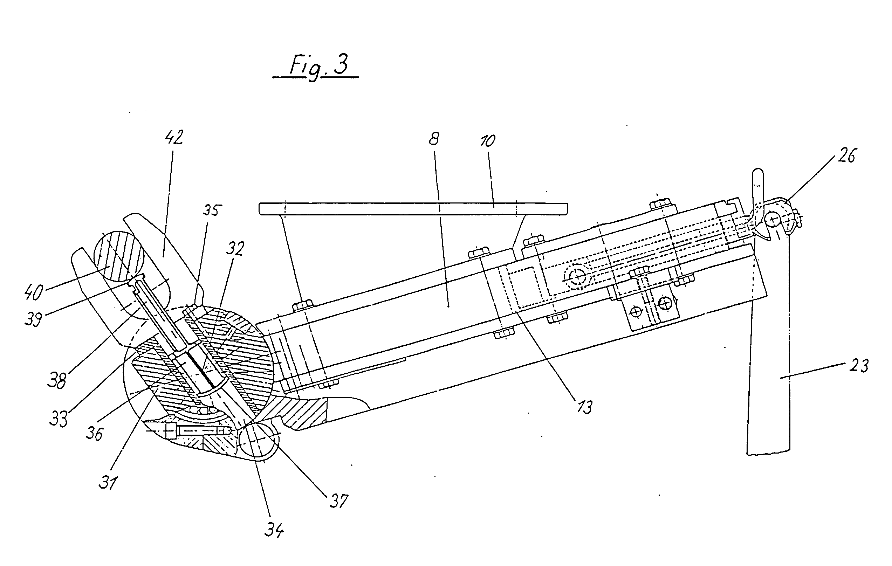

Der Drehschieber 31 wird ebenfalls vom Antriebsmotor 16 über den Kurbeltrieb 18 angetrieben. Hierzu ist am Kurbeltrieb 18 eine Pleuelstange 60 angelenkt, an deren anderem Ende ein gebogener doppelarmiger Hebel 61 angelenkt ist, der außermittig um eine Achse 62 im Gestell 1 gelagert ist. An dem der Pleuelstange 60 abgewandten Ende des Hebels 61 ist eine Schub-Zug-Stange 61a angelenkt, die wiederum an einem Schwenkhebel 63 angelenkt ist, der fest mit dem Drehschieber 31 verbunden ist. Bei einer Umdrehung des Kurbeltriebs 18 bewegt sich die Pleuelstange 60 einmal auf und ab, und der gebogene Hebel 61 schwenkt einmal hoch und einmal runter. Daraus ergibt sich, daß der Schwenkhebel 63 einmal hin- und hergeschwenkt wird, wobei er den drehbar im Gestell 1 gelagerten Drehschieber 31 mitnimmt. Der Drehschieber 31 kommt hierbei zum einen in eine Position, in der die Meßkammern 34 zu den Förderkammern 8 bzw. 9 hin offen sind. Zum anderen kommt er hierbei in eine in Fig. 3 dargestellte Position, in der die Meßkammern 34 zur unter ihnen angeordneten Wirk-Einrichtung 5 hin offen sind.

Die Wirk-Einrichtung 5 weist üblicherweise eine Wirktrommel 64 auf, die konzentrisch von einer Kammertrommel 65 umgeben ist. in der Kammertrommel 65 sind nach außen und zur Wirktrommel 64 hin offene Wirkkammern 66 ausgebildet, in die Teigstücke 44 abgelegt werden. Die Kammertrommel 65 ist über einen Teil ihres Umfangs von einem die Teigstücke 44 gegen die Wirktrommel 64 drückenden und am Herausfallen aus den Wirkkammern 66 hindernden Wirkband 67 umschlungen. Das endlos ausgebildete Wirkband 67 ist über verschiedene Umlenkrollen 68 und eine Spannrolle 69 geführt und wird von der umlaufend antreibbaren Kammertrommel 65 schlupffrei mitgenommen. Die Wirktrommel 64 ist in Richtung der gemeinsamen Achse 70 von Wirktrommel 64 und Kammertrommel 65 und in tangentialer Richtung, d.h. in Umfangsrichtung relativ zur Kammertrommel 65, also oszillierend bewegbar, so daß die in den Wirkkammern 66 befindlichen, einerseits gegen die Wirktrommel 64 und andererseits gegen das Wirkband 67 anliegenden Teigstücke 44 rundgewirkt werden. Aufbau und Wirkungsweise derartiger Wirk-Einrichtungen sind allgemein bekannt, und zwar beispielsweise aus der DE-AS 11 26 333 (entsprechend US-PS 3 152 039), worauf verwiesen werden darf. In Richtung der Achse 70 der Kammertrommel 65 sind in dieser so viele Wirkkammern 66 hintereinander vorgesehen, wie im Drehschieber 31 Meßkammern 34 ausgebildet sind.

Die Transport-Einrichtung 6 besteht aus gespreizt angeordneten Endlos-Transportbändern 71 und 72, die über Umlenkrollen 73 und eine Antriebsrolle 74 geführt sind. Die Zahl der Transportbänder 71 entspricht der Zahl der der Förderkammer 8 zugeordneten Zahl von Meßkammern 34; die Zahl der Transportbänder 72 entspricht der Zahl der der Förderkammer 9 zugeordneten Meßkammern 34. Die Transport-Einrichtung 6 führt beispielsweise zu einem nachgeordneten Gärschrank. Dem Wirkband 67 ist ein Mehlstreuer 75 zugeordnet.

Die dargestellte und beschriebene Maschine arbeitet wie folgt:

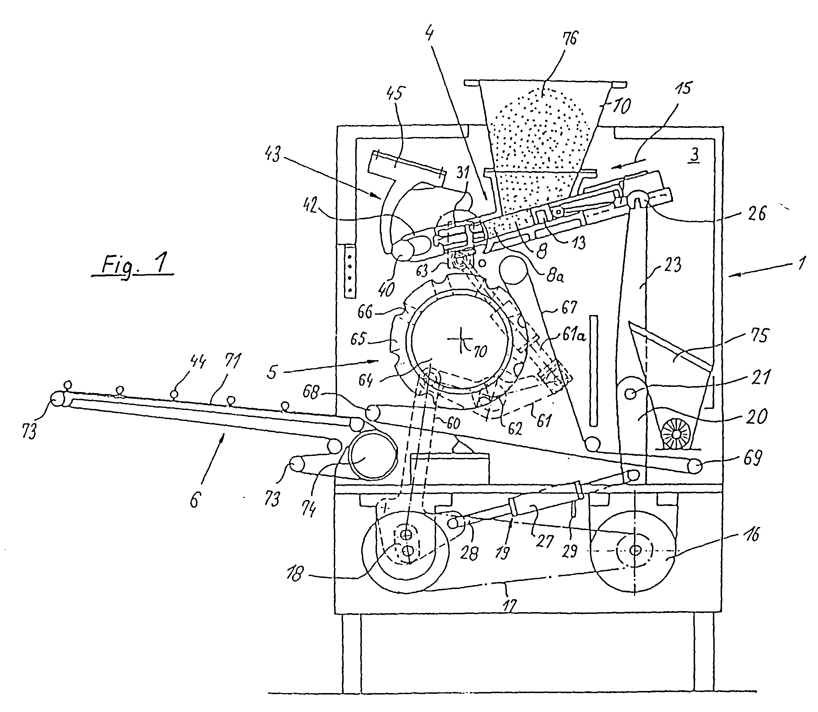

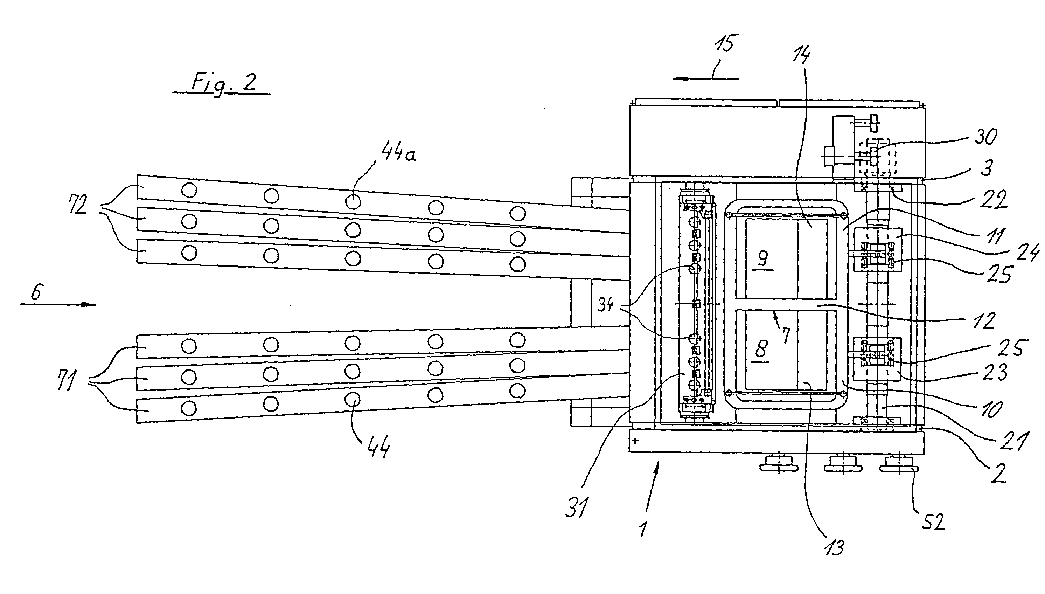

Im Teigtrichter 10 befindet sich eine Sorte Teig 76; im anderen Teigtrichter 11 befindet sich eine andere, in der Zeichnung nicht gesondert dargestellte Sorte Teig. Beim Rückhub der Förderkolben 13, 14 entgegen der Förderrichtung 15 in die in den Fig. 1 und 2 dargestellte Stellung wird der im jeweiligen Teigtrichter 10 bzw. 11 befindliche Teig 76 in die Förderkammern 8 bzw. 9 gesaugt und füllt diese aus, wie in Fig. 1 dargestellt ist. Bei umgekehrter Richtung, also in Förderrichtung 15 verlaufendem Förderhub der Förderkolben 13, 14 werden die Förderkolben 13, 14 in Richtung zum Drehschieber 31 hin verschoben. Die Förderkolben 13, 14 schließen beim Erreichen der nicht mehr zum jeweiligen Teigtrichter 10 bzw. 11 offenen, geschlossenen Abschnitte 8a bzw. 9a der Förderkammern 8, 9 diese ab. Der Drehschieber 31 befindet sich in einer in Fig. 1 dargestellten Position, in der die Meßkammem 34 zur jeweiligen Förderkammer 8 bzw. 9 hin offen sind. Durch den Förderhub der Förderkolben 13 bzw. 14 werden die Meßkammern 34 mit Teig 76 gefüllt, wobei die Meßkolben 36 so weit verschoben werden, bis die ihnen zugeordnete Steuerwalze 40 bzw. 41 an den Kurvenstücken 46 bzw. 47 anliegt. Hierdurch wird der Hub der Meßkolben 36 begrenzt und damit das Volumen und damit wiederum das Gewicht der Teigstücke 44 bzw. 44a festgelegt. Wenn während dieses Füllhubes bzw. Förderhubes der Druck in den geschlossenen Abschnitten 8a bzw. 9a der Förderkammern 8 bzw. 9 zu groß wird, dann öffnet - wie bereits oben beschrieben - das der Schubstange 19 zugeordnete Druckbegrenzungsventil 30.

Während des anschließenden Rückhubes der Förderkolben 13, 14 wird der Drehschieber 31 - in den Fig. 1 und 3 im Uhrzeigersinn - verschwenkt, wodurch die Steuerwalzen 40 bzw. 41 an den Kurvenstücken 46 bzw. 47 der Gewichtseinstell-Einrichtung 43 abrollen und die Meßkolben 36 in der Weise in den Meßkammern 34 verschieben, daß durch die Kolbenflächen 37 die in den Meßkammern 34 befindlichen Teigstücke 44, 44a nach unten ausgestoßen werden und in die Wirkkammern 66 der Wirk-Einrichtung 5 fallen.

In den beiden Teigtrichtern 10, 11 kann sich Teig 76 unterschiedlicher Rezeptur bfinden. Die aus den unterschiedlichen Teigen einerseits aus der Förderkammer 8 und andererseits aus der Förderkammer 9 abgeteilten Teigstücke 44 bzw. 44a können unterschiedliches Gewicht haben, da die Gewichtseinstellung unterschiedlich sein kann. Die unterschiedlichen Teigstücke 44, 44a können nach dem Wirken getrennt abgefördert werden.

Die Klemmeinrichtungen 25 können gegeneinander um einen kleinen Winkel versetzt auf der Schwingwelle 21 festgeklemmt werden, so daß ein Förderkolben 13 bzw. 14 gegenüber dem anderen Förderkolben 14 bzw. 13 beim Förderhub in Förderrichtung 15 voreilt. Dadurch wird erreicht, daß der voreingestellte Fülldruck in der dem voreilenden Förderkolben 13 bzw. 14 zugeordneten Förderkammer 8 bzw. 9 eher erreicht wird als in der dem nacheilenden Förderkolben 14 bzw. 13 zugeordneten Förderkammer 9 bzw. 8. Dadurch bedingt öffnet das Druckbegrenzungsventil 30 bereits, wenn der voreingestellte Fülldruck in der dem voreilenden Förderkolben 13 bzw. 14 zugeordneten Förderkammer 8 bzw. 9 erreicht wird. In der dem nacheilenden Förderkolben 14 bzw. 13 zugeordneten Förderkammer 9 bzw. 8 wird also ein niedrigerer Fülldruck erreicht. Da Teig ein komprimierbarerer Stoff ist, kann diese Möglichkeit ausgenutzt werden, wenn zwei verschiedene Teigsorten mit stark unterschiedlicher Konsistenz und stark unterschiedlicher Kompressibilität eingesetzt werden.

Anstelle der vorstehend geschilderten Ausgestaltung können im Drehschieber 31 auch zwei Meßeinheiten 33 vorgesehen sein, von denen jeweils eine jeder Förderkammer 8 bzw. 9 zugeordnet ist. Diese Meßeinheiten können Meßkammern 34 unterschiedlichen Durchmessers aufweisen.

## Patentansprüche

1. Teigteil- und Wirk-Maschine mit folgenden Merkmalen:
- mindestens zwei voneinander getrennte Teigtrichter (10, 11);
- je eine jedem Teigtrichter (10, 11) nachgeordnete Förderkammer (8, 9);
- je einen in jeder Förderkammer (8, 9) verschiebbar angeordneten Förderkolben (13, 14);
- mindestens eine jeder Förderkammer (8, 9) nachgeordnete Meßkammer (34), die zwischen einer zur Förderkammer (8, 9) hin offenen ersten Position und einer von der Förderkammer (8, 9) freien zweiten Position bewegbar ist;
- je einen in jeder Meßkammer (34) verschiebbar angeordneten Meßkolben (36), der in der ersten Position der Meßkammer (34) diese teilweise frei gibt und der in der zweiten Position der Meßkammer (34) diese entleert.

2. Teigteil- und Wirk-Maschine nach Anspruch 1, wobei der Hub des mindestens einen jeder Förderkammer (8, 9) zugeordneten Meßkolbens (36) unterschiedlich einstellbar ist.

3. Teigteil- und Wirk-Maschine nach Anspruch 1 oder 2, wobei jeder Förderkammer (8, 9) eine Steuerwalze (40, 41) zugeordnet ist, gegen die der mindestens eine Meßkolben (36) anliegt, wobei die Steuerwalzen (40, 41) gegen Kurvenstücke (46, 47) anliegen und beim Bewegen der Meßkammem (34) aus der ersten in die zweite Position die Meßkolben (36) in den Meßkammern (34) verschieben und wobei die einer Steuerwalze (40) zugeordneten Kurvenstücke (46) relativ zu den einer anderen Steuerwalze (41) zugeordneten Kurvenstücke (47) verstellbar sind.

4. Teigteil- und Wirk-Maschine nach einem der Ansprüche 1 bis 3, wobei der Hub der Förderkolben (13, 14) verstellbar ist.

## Claims

1. A dough portioning and kneading machine comprising the following features:
- at least two dough hoppers (10, 11) separated from each other;
- a conveying chamber (8, 9) disposed downstream of each dough hopper (10, 11);
- a conveying piston (13, 14) disposed displaceably in each conveying chamber (8, 9);
- at least one metering chamber (34) which is disposed downstream of each conveying chamber (8, 9) and which is movable between a first position open towards the conveying chamber (8, 9) and a second position free from the conveying chamber (8, 9);
- a metering piston (36) which is disposed for displacement in each metering chamber (34) and which partially releases the metering chamber (34) in the latter's first position and which empties the metering chamber (34) in the latter's second position.

2. A dough portioning and kneading machine according to claim 1, wherein the stroke of the at least one metering piston (36) allocated to each conveying chamber (8, 9) is variably adjustable.

3. A dough portioning and kneading machine according to claim 1 or 2, wherein a drum controller (40, 41), against which bears the at least one metering piston (36), is allocated to each conveying chamber (8, 9), the drum controllers (40, 41) bearing against curved segments (46, 47) and displacing the metering pistons (36) in the metering chambers (34) when the metering chambers (34) move from the first into the second position, and the curved segments (46) allocated to a drum controller (40) being adjustable in relation to the curved segments (47) allocated to another drum controller (41).

4. A dough portioning and kneading machine according to one of claims 1 to 3, wherein the stroke of the conveying pistons (13, 14) is adjustable.

## Revendications

1. Machine de division et de pétrissage de pâte présentant les particularités suivantes :
- au moins deux trémies de pâte (10, 11) séparées l'une de l'autre ;
- une chambre de transport (8, 9) disposée en aval de chaque trémie de pâte (10, 11) ;
- un piston de transport (13, 14) disposé de façon à pouvoir être déplacé dans chaque chambre de transport (8, 9) ;
- au moins une chambre de dosage (34) disposée en aval de chaque chambre de transport (8, 9), qui peut être déplacée entre une première position ouverte en direction de la chambre de transport (8, 9) et une deuxième position libérée de la chambre de transport (8, 9) ;
- un piston de dosage (36) disposé de façon à pouvoir être déplacé dans chaque chambre de dosage (34) qui, dans la première position de la chambre de dosage (34) dégage celle-ci partiellement, et qui dans la deuxième position de la chambre de dosage (34) vide celle-ci.

2. Machine de division et de pétrissage de pâte selon la revendication 1, dans laquelle la course du seul piston de dosage (36) au moins associé à chaque chambre de transport (8, 9) est réglable de façon différente.

3. Machine de division et de pétrissage de pâte selon la revendication 1 ou 2, dans laquelle un cylindre de commande (40, 41) est associé à chaque chambre de transport (8, 9), contre lequel prend appui le seul piston de dosage (36) au moins, les cylindres de commande (40, 41) prenant appui contre des éléments à came (46, 47) et, lors du déplacement des chambres de dosage (34) de la première dans la deuxième position, déplacent les pistons de dosage (36) dans les chambres de dosage (34), et les éléments à came (46) associés à un cylindre de commande (40) pouvant être déplacés par rapport aux éléments à came (47) associés à un autre cylindre de commande (41).

4. Machine de division et de pétrissage de pâte selon l'une quelconque des revendications 1 à 3, dans laquelle la course des pistons de transport (13, 14) est réglable.
